Europäisches Patentamt

European Patent Office

Office européen des brevets

(19)

(11) **EP 0 482 802 B1**

(12) **EUROPEAN PATENT SPECIFICATION**

(45) Date of publication and mention
of the grant of the patent:
**25.09.1996 Bulletin 1996/39**

(51) Int Cl.⁶: **G11B 27/00**, G11B 15/68,
H04N 7/12, H04H 1/00,
H04H 7/00

(21) Application number: **91309348.0**

(22) Date of filing: **10.10.1991**

(54) **Automatic transmission systems for television and radio broadcasting**

Automatisches Übertragungsverfahren für Fernseh- und Rundfunkübertragung

Systèmes de transmission automatiques pour télédiffusion et radio-diffusion

(84) Designated Contracting States:
**DE FR GB**

(30) Priority: **23.10.1990 AU 2987/90**

(43) Date of publication of application:
**29.04.1992 Bulletin 1992/18**

(73) Proprietor: **SONY AUSTRALIA LIMITED**
**North Ryde, New South Wales 2113 (AU)**

(72) Inventors:
• **Witheridge, Neil**
**Glebe, New South Wales 2037 (AU)**
• **Debray, Tapas Kumar**
**Seven Hills, New South Wales 2147 (AU)**

(74) Representative: **Cotter, Ivan John et al**
**D. YOUNG & CO.**
**21 New Fetter Lane**
**London EC4A 1DA (GB)**

(56) References cited:
**EP-A- 0 162 248**          **EP-A- 0 289 986**
**EP-A- 0 394 939**          **EP-A- 0 482 801**
**DE-A- 2 238 030**          **US-A- 4 724 491**
**US-A- 4 729 044**

## Description

This invention relates to automatic transmission systems for television and radio broadcasting.

With the advent of television networking, and in particular broadcasting of a common core programme from a network studio to several regions or regional transmitters, a need has arisen for the transmission from a single studio of different sequences of play items simultaneously. This need arises in the following way. The network transmits a core programme of entertainment to transmitters servicing each region of the network simultaneously. However, each region of the network is based around a major population centre and its hinterland. As a result, the viewers of each region constitute separate markets for some types of advertisements. Thus during commercial breaks, local advertisers wish to have their advertisement displayed within their own region, but not also displayed within any of the other regions in the network.

As a consequence, it is necessary for different advertisements to be displayed in each of the different regions in the network. Since the advertisements are not of identical duration, it is necessary for the advertisements to be carefully scheduled in order that the commercial break at each station be of identical duration so that all commercial breaks can commence and finish simultaneously.

Hitherto, this requirement for simultaneous, but different, commercial breaks has been met by the network studio having a single channel automatic transmission system (ATS) for each region which arranges for the sequential transmission of each of the advertisements which is to be displayed during the commercial break.

An example of an ATS is disclosed in EP-A-0 289 986.

However, such ATSs are relatively expensive pieces of equipment (A$ 250,000 to A$ 1,000,000) including as they do an elaborate cartridge storage and retrieval system, and at least two and typically four video tape recorders (VTRs) which play respective cassettes in the sequence of advertisements.

To reduce overall costs in the network, it would be desirable to have a multi-channel ATS which could simultaneously broadcast different sequences of advertisements for each of the regions in the network during a network-wide commercial break. Thus the central network studio need posses fewer ATSs to service the number of regions.

According to the present invention there is provided a method of merging a plurality of playlists each for a single channel and of equal length into a single playlist for simultaneous multi-channel transmission using an automatic transmission system comprising a plurality of cassette players, a storage device for storing cassettes to be played by the cassette players, and an elevator mechanism for transporting cassettes between the players and the storage device, an operation of playing a stored cassette involving an elevator service time for changing the cassette and a sum of cumulative thread, cue and pre-roll times after transporting the cassette to the player before the player commences reproduction of recorded material, said method comprising the steps of:

determining the maximum number of cassette changes able to be performed during the playlist length and checking that the required number of cassette changes is less than or equal to said maximum number, and, if so, checking that for each event for each channel other than the first event, the sum of the cumulative thread, cue and pre-roll times, and the elevator service times is less than or equal to the sum of the total event durations including the event being checked less the total of the previous event durations for that channel.

The invention will now be described by way of example with reference to the accompanying drawings, throughout which like parts are referred to by like references, and in which:

Figure 1 is a schematic representation of a prior art arrangement where a single network studio services a number of regions;
Figure 2 is a representation similar to Figure 1 but for the arrangement of the preferred embodiment;
Figure 3 is a block diagram of the apparatus which enables multi-channel operation by an ATS;
Figure 4 is a flowchart showing the sequence of operations for the necessary scheduling; and
Figure 5 is a timing diagram.

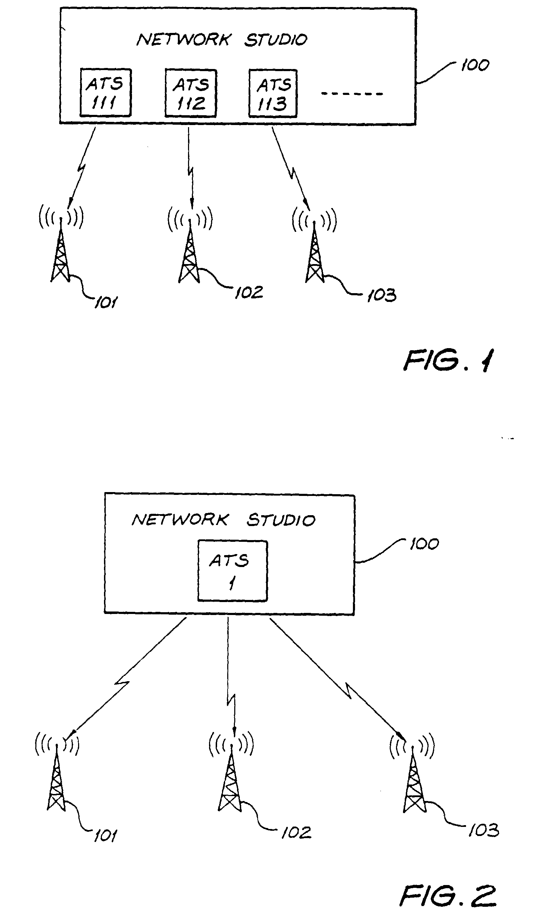

In the prior art arrangement of Figure 1, a single network studio 100 services a number of regions each of which has its own local regional transmitter 101, 102, 103, and so on. The programme for each of the regional transmitters 101 to 103 is determined by a corresponding single channel ATS 111, 112, 113 and so on. As each ATS costs A$ 250,000 to A$ 1,000,000, the capital costs associated with the central network studio 100 have hitherto been very high.

The corresponding arrangement in accordance with the preferred embodiment is illustrated in Figure 2. Here it will be seen that the central network studio 100 utilizes only a single multi-channel ATS 1 which is able to determine the programme for each of the regional transmitters 101 to 103 simultaneously.

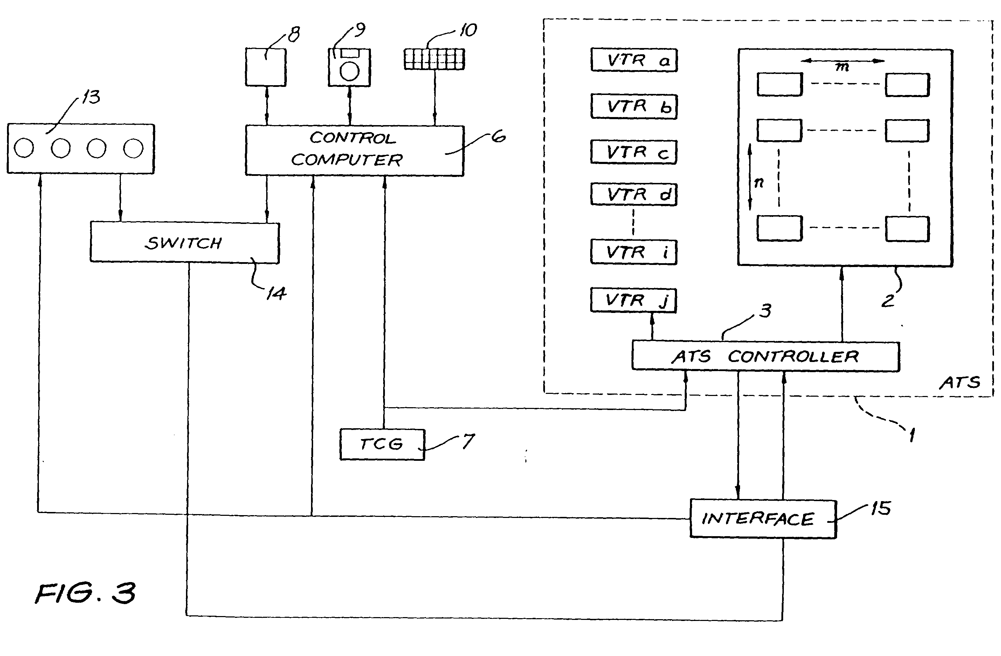

Referring now to Figure 3, the ATS 1 of the preferred embodiment is illustrated schematically. Included within the ATS 1 is a cartridge access and retrieval (CAR) device 2 which is generally of known form and comprises an array of n rows and m columns of cartridge storage locations, and a transport mechanism (not illustrated). The transport mechanism is able to retrieve a cartridge from a nominated storage position and enter it into one of a number of VTRs, VTRa-VTRj in order to enable the VTR to play the contents of the cartridge. At the end of the cartridge playing time, the cartridge is removed from the VTR and returned to its storage location by the transport mechanism.

A known ATS has only a small number of VTRs (typically at least two such as VTRa and VCRb). Normally four VTRs would be used but the minimum number of VTRs which must be present is that which will guarantee uninterrupted transmission of advertisements of a fixed minimum duration. These VTRs play consecutive cartridges in a sequence of advertisements.

Since the ATS 1 is intended for multi-channel operation there are further VTRs required to provided uninterrupted transmission assuming the same minimum advertisement duration. These VTRs are indicated as VTRa to VTRi. The CAR device 2 and VTRs are under the control of an ATS controller 3.

To arrange for the necessary control and sequencing of the ATS 1, a control computer 6 (which preferably takes the form of a small personal computer), and a time and control code generator (TCG) 7 are provided. The TCG 7 is accurate to at least the time of one frame of a television signal and provides a synchronizing signal to both the control computer 6 and the ATS controller 3. In addition, the control computer 6 is able to receive inputs from any one or more of a host computer 8, a floppy disc 9 and a keyboard 10.

A push button panel 13 is also provided for manual control of multi-channel transmission. This is achieved by the connection of both the push button panel 13 and the computer 6 to respective inputs of a switch 14. The output of the switch 14 is connected to the ATS controller 3 via an interface 15 which converts the parallel output of the switch 14 into a serial input for the ATS controller 3. Should the ATS controller 3 include a parallel input/output port, the interface 15 would not be required.

In addition, the interface 15 receives data from the ATS controller 3 and sends then to both the control computer 6 and the push button panel 13 for the purpose of logging and display of the current state of the ATS 1 on the panel 13, for example, by tally signals.

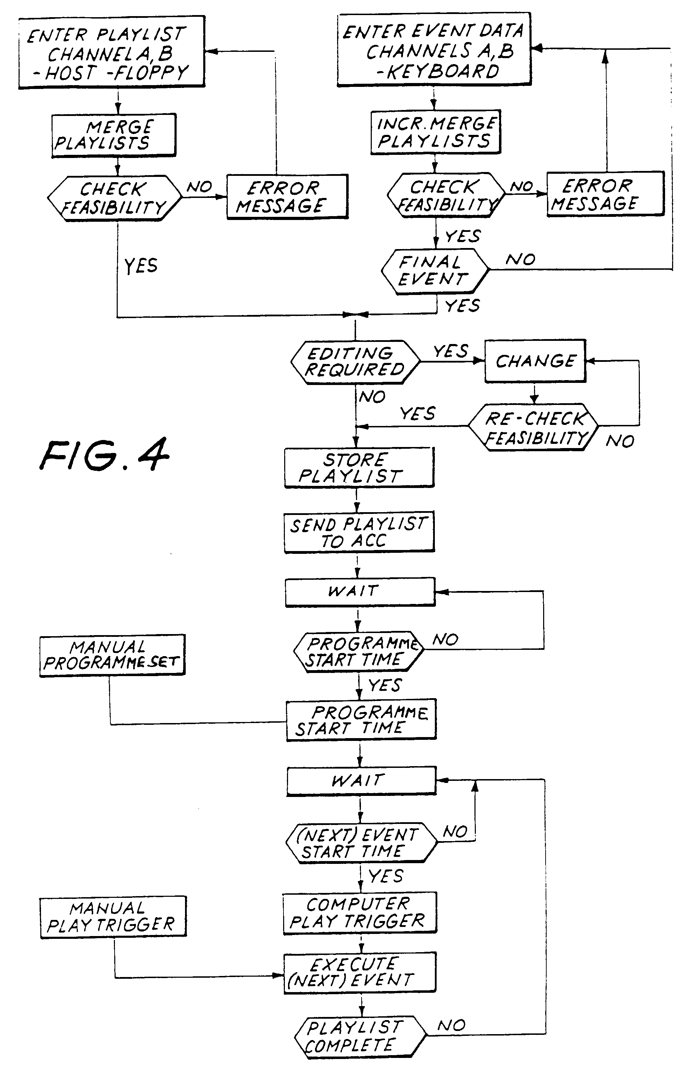

Turning now to Figure 4, a flowchart of the scheduling arrangements is illustrated. The flowchart is of generally Y-shaped configuration.

The top righthand arm of the Y deals with the keyboard entry of data, and the upper lefthand arm of the Y of the flowchart deals with the host computer or floppy disc transfer of data. These data in both instances relate to the playlist for each commercial break for each of the channels or stations of the network. The entry via the keyboard 10 allows the incremental checking on an event by event basis as the playlist data are entered. It is necessary to determine that the sum of the play duration of each play item of the sequence of each channel, is identical to the total duration of the playlist. That is to say it is not possible for channel A to play two commercials each of 90 seconds duration whilst channel B, for example, plays two 60 second commercials and one 90 second commercial since the commercial break on channel B would then be of a different duration from the commercial break on channel A.

Most importantly, since the CAR device 2 of Figure 3 has a finite access time for the removal and retrieval of cartridges, it is also necessary to ensure that the sum of the access time and cassette movement times(s) of each play item is less than the duration of the preceding play items in the sequence so as not to prevent uninterrupted transmission of the sequence of advertisements for each channel.

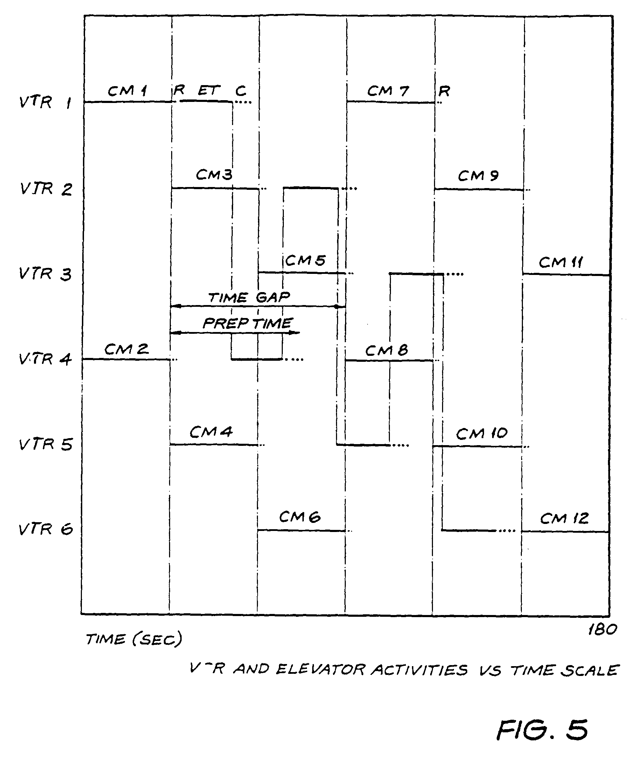

To understand this further requirement which must also be met, reference is made to Figure 5 which is a timing diagram which sets out the VTR activity during a commercial break, and also that of the transport mechanism of the CAR device 2.

In Figure 5, unemphasized horizontal line segments represent commercial playback, dotted small segments (R) represent the sum of post-roll time + rewind time + eject time, bold line segments (ET) represent elevator cassette movement time for changing the cassette, and bold broken line segments (C) represent the sum of thread time + cue time + pre-roll time.

The following assumptions are made:

1) The time slot (T) is an amount of time into which the whole commercial break is hypothetically set. That is, the minimum possible duration of a single advertisement.
2) The commercial break is hypothetically calibrated in terms of N time slots of T such that CM break = N.T seconds. The commercial units or advertisements durations of channel A and channel B belonging to the same group of time slots are arranged to be of equal duration.
3) VTR1, VTR2 and VTR3 are used for channel A, VTR4, VTR5 and VTR6 are used for channel B.
4) If two channels are supported by the known ATS machine maintaining assumption (2) and (3), channel B is very likely to be delayed due to belated service by the elevator (or transport mechanism).
5) Variation of elevator service time (ET) around average elevator service time is negligible.
6) In mathematical expressions,
$CM_n$ represents the duration of the advertisement or commercial unit. An odd subscript means it is an event for channel A. An even subscript means it is an even for channel B.

If under some conditions, it can be guaranteed that B channel is not delayed, it can be practically guaranteed that under those conditions, dual channel operation can be achieved.

To derive the constraints which will guarantee that all channel B events commence at the correct time, the worst case should be analyzed to guarantee that the worst case is still feasible.

The worst case situation occurs when all commercial units are of a duration of one time slot. That is, all the advertisements are of the minimum possible duration. Under these conditions the transport mechanism elevator is under maximum load.

Figure 5 depicts this worst case situation as the commercial units are each equal to the length of the time slot. A more relaxed playlist would contain some corresponding commercial units of channel A and channel B as multiples of the time slot (T).

To start a CM unit at the correct time, its preparation time must be less than or equal to the available time gap.

Considering the worst case, in order to guarantee correct commencement of the 4th CM unit, the following inequality must be observed:

$$R + 2\,ET_{max} + C_1 \leq 2\,T \tag{1}$$

Similarly for the 5th CM unit

$$R + 4\,ET_{max} + C_2 \leq 3\,T \tag{2}$$

and for the 6th CM unit

$$R + 6\,ET_{max} + C_3 \leq 4\,T \tag{3}$$

In general therefore, in order to guarantee correct commencement of the i=1)th CM unit, the following inequality must hold true for ($3 \leq i \leq N$).

$$R + 2\,(i - 2)\,ET_{max} + C_{i-2} \leq (i - 1)\,T \tag{4}$$

$$\text{i.e. } ET_{max} \leq \frac{(i - 1)\,T - (R + C_{i-2})}{2\,(i - 2)}$$

$$\text{So, } \lim_{i \to \infty} ET_{max} \leq \lim_{i \to \infty} \frac{(i - 1)\,T - (R + C_{1-2})}{2\,(i-2)}$$

$$\text{Hence } ET_{max} \leq \frac{T}{2}$$

Therefore, in order to support the worst case, the minimum commercial unit duration should be greater than or equal to twice the maximum elevator service time. If the maximum elevator service time is 15 sec. then a worst case with all commercial units of 30 sec. duration can be guaranteed for dual channel transmission.

If a commercial break is calibrated in terms of N time slots (T) then the maximum No of cassette changes (n), which can be achieved in (N-1) timeslots is given by:

$$R + n\,ET_{max} + C_{N-3} \leq (N - 2)\,T$$

$$\text{i.e. } n\,ET_{max} \leq (N - 2)\,T - (R + C_{N-3})$$

$$\text{i.e. } n \leq \frac{(N-2)\,T - (R + C_{n-3})}{ET_{max}}$$

$$\text{i.e. } n \leq \frac{CMBreak - (R + C_{N-3})}{ET_{max}} - \frac{2\,T}{ET_{max}}$$

$$\text{i.e. } n \leq \frac{CMBreak - (R + C_{N-3})}{ET_{max}} - 4 \text{ by using } T = 2\,ET_{max}$$

Hence

$$n_{max} = \frac{\text{CMBreak} - (R_{min} + C_{min})}{ET_{max}} - 4$$

For a dual channel playlist, the maximum number of allowable cassette changes for a given commercial break can be computed using equation (5) above. From the dual channel playlist the required number of cassette changes for the same commercial break can also be determined.

For all dual channel commercial breaks, the following inequality must be maintained:

Required number of cassette changes ≤ Maximum allowable number of cassette changes.

Inequality (4) is actually valid under the assumptions made in the beginning of this analysis. In a real case, commercial units for both channels can be of different length. The following inequalities provide the same property as that of inequality (4) for such a case.

For channel A, in order to start (i + 1)th commercial unit correctly (i ≥ 3), if n(i) is the total number of cassette changes which must be done to support both channels within the time gap then:

$$R_{max} + n(i)\, ET_{max} + C_{max} \le \sum_{j=1}^{j=1} CM_{2j-1} - \sum_{j=1}^{j=i-2} CM_{2j-1}\, \ldots\, \ldots\, \ldots\, (6A)$$

Similarly, for channel B, in order to start (i + 1)th commercial unit correctly (i ≥ 3), if n(i) is the total number of cassette changes which must be done to support both channels within the time gap then;

$$R_{max} + n(i)\, ET_{max} + C_{max} \le \sum_{j=1}^{j=1} CM_{2j} - \sum_{j=1}^{j=i-2} CM_{2j}\, \ldots\, \ldots\, \ldots\, (6B)$$

In a dual channel playlist, indexing to i, the different required n(i) values for every commercial event can be found. By applying inequalities (6A) and (6B) for every commercial event on a per channel basis, whether the constraint is maintained, and thus whether it is feasible to start the event correctly, can be determined.

Equation (5) and inequalities (6A) and (6B) provide a mathematical basis for the development of a two-pass check to determine the feasibility of a dual channel playlist.

This theory can be demonstrated with the help of three simple playlists.

| PLAYLIST 1 | | |
|---|---|---|
| EVENT | CHANNEL | DURATION |
| CM01 | A | 15 |
| CM02 | B | 15 |
| CM03 | A | 30 |
| CM04 | B | 30 |
| CM05 | A | 10 |
| CM06 | B | 10 |
| CM07 | A | 10 |
| CM08 | B | 10 |
| CM09 | A | 15 |
| CM10 | B | 15 |
| CM11 | A | 10 |
| CM12 | B | 10 |

The duration of playlist 1 is 90 sec.

First check to see if the required number of cassette changes for this 90 sec. commercial break is within its maximum allowable limit.

If the maximum value of ET is taken as 10 sec, and the minimum value of (R+C) is taken as 20 sec (which are quite realistic values), the maximum number of allowable cassette changes for this commercial break is found to be equal to three using equation (5)[((90 - 20) / 10) - 4 = 3].

Playlist 1 requires six cassette changes during the commercial break which is greater than the maximum allowable limit of three. Hence the first pass of the check rejects playlist 1 as not being a feasible playlist.

| PLAYLIST 2 | | |
|---|---|---|
| EVENT | CHANNEL | DURATION |
| CM01 | A | 30 |
| CM02 | B | 30 |
| CM03 | A | 15 |
| CM04 | B | 15 |
| CM05 | A | 15 |
| CM06 | B | 15 |
| CM07 | A | 30 |
| CM08 | B | 30 |

Playlist 2 requires two cassette changes which is lower than the maximum allowable limit for the same commercial break. Hence the first pass of the check will accept playlist 2. However, in the second pass of the check, inequality (6A) fails to satisfy for i = 3. Similarly, inequality (6B) fails for i = 3. Hence the second pass rejects playlist 2 as not being a feasible playlist.

| PLAYLIST 3 | | |
|---|---|---|
| EVENT | CHANNEL | DURATION |
| CM01 | A | 15 |
| CM02 | B | 15 |
| CM03 | A | 30 |
| CM04 | B | 30 |
| CM05 | A | 30 |
| CM06 | B | 30 |
| CM07 | A | 15 |
| CM08 | B | 15 |

Playlist 3 requires two cassette changes which is lower than the maximum allowable limit for the same commercial break. Hence the first pass of the check accepts this playlist as a valid one. In the second pass, both inequality (6A) and (6B) holds true for i = 3 (taking the maximum realistic value of (R+C) as 40 sec.). As the (1+1)th CM unit is the last CM unit for both channels in the playlist for 1=3, the second pass of the check terminates by accepting playlist 3 as a valid or feasible playlist.

When the above-described procedures have been carried out, a complete schedule of the intended sequence of advertisements is then available and is stored in the control computer 6. The time code generator 7 provides the timing information necessary to enable the control computer 6 to determine that the commercial break start time has occurred. When this happens, the control computer 6 via the switch 14 and interface 15 triggers the ATS controller 3 thereby commencing the programme simultaneously on each channel. The sequence of events of each channel stored in the control computer 6 then takes place with synchronization being provided by the TCG 7. As a consequence, the core programme is transmitted to all the channels or stations in the network and at each commercial break, which occurs simultaneously on all channels, a different sequence of advertisements is broadcast for each channel.

In order to cater for various day-to-day operational situations which arise in broadcasting, it is desirable to enable manual instructions to be inserted via the push button panel 13 which can, for example, freeze an image, or result in transmission of a stand-by channel identification image. This may be necessary because of a defect in a cartridge which only becomes apparent when the cartridge actually malfunctions, or because of last minute withdrawal of a previously scheduled advertisement.

The invention is also applicable to radio broadcasting.

**Claims**

1. A method of merging a plurality of playlists each for a single channel and of equal length into a single playlist for simultaneous multi-channel transmission using an automatic transmission system (1) comprising a plurality of cassette players (VTRa-VTRj), a storage device (2) for storing cassettes to be played by the cassette players, and an elevator mechanism for transporting cassettes between the players and the storage device, an operation of playing a stored cassette involving an elevator service time (ET) for changing the cassette and a sum (C) of cumulative thread, cue and pre-roll times after transporting the cassette to the player before the player commences reproduction of recorded material, said method comprising the steps of: determining the maximum number of cassette changes able to be performed during the playlist length and checking that the required number of cassette changes is less than or equal to said maximum number, and, if so, checking that for each channel for each event other than the first event, the sum of the cumulative thread, cue and pre-roll times, and the elevator service times (ET) is less than or equal to the sum of the total event durations including the event being checked less the total of the previous event durations for that channel.

2. A method according to claim 1 wherein the maximum number of cassette changes able to be performed during the playlist length is determined by adding in seconds the time taken after the cessation of reproduction of recorded material on a cassette by a player until the cassette is able to be transported back to the storage device (2), namely the sum (R) of the minimum post-roll time, rewind time and eject time, to the sum of the minimum thread time, cue time and pre-roll time; subtracting the result thereby obtained from the duration of the playlist length; dividing the result thereby obtained by the maximum elevator service time, and subtracting four therefrom.

3. A method according to claim 2 wherein numerical values in seconds of the thread time, cue time, pre-roll time, post-roll time, rewind time, eject time and elevator service time are selected in accordance with the known performance of the cassette access and retrieval device intended to be used for said simultaneous multi-channel transmission.

4. A method according to claim 1, claim 2 or claim 3 wherein said playlists are merged prior to operation of a multi-channel automatic transmission system.

**Patentansprüche**

1. Verfahren zum Zusammenfügen einer Vielzahl von Spiellisten, deren jede für einen einzelnen Kanal vorgesehen ist und die von gleicher Länge sind, zu einer einzigen Spielliste für eine gleichzeitige Mehrkanalübertragung, unter Verwendung eines automatischen Übertragungssystems (1), mit einer Vielzahl von Kassettenabspielgeräten (VTRa-VTRj), einer Lagereinrichtung (2) zum Lagern von durch die Kassettenabspielgeräte abzuspielenden Kassetten und einem Fördermechanismus zum Transport von Kassetten zwischen den Abspielgeräten und der Lagereinrichtung,

wobei ein Abspielbetrieb einer gelagerten Kassette eine Förderbedienungszeit (ET) für den Wechsel der Kassette und eine Summe (C) von kumulativen Einlege-, Umspul-Abhör- und Vorlaufzeiten nach Transport der Kassette in das Abspielgerät vor Beginn der Wiedergabe des aufgezeichneten Materials durch das Abspielgerät umfaßt,
umfassend folgende Schritte:
Bestimmen der maximalen Anzahl von Kassettenwechseln, die während der Spiellistenlänge ausführbar sind, und Überprüfen, daß die geforderte Anzahl der Kassettenwechsel gleich oder kleiner ist als die genannte maximale Anzahl, und bejahendenfalls Überprüfen, daß für jeden Kanal bezüglich jedes vom ersten Ereignis verschiedenen Ereignisses die Summe der kumulativen Einlege-, Umspul-Abhör- und Vorlaufzeiten und die Förderbedienungszeiten (ET) gleich oder kleiner ist als die Summe der gesamten Ereignisdauern einschließlich des überprüften Ereignisses abzüglich der Gesamtheit der vorhergehenden Ereignisdauern für den betreffenden Kanal.

2. Verfahren nach Anspruch 1, wobei die maximale Anzahl der Kassettenwechsel, die während der Spiellistenlänge durchführbar sind, dadurch bestimmt wird, daß in Sekunden die Zeit, die nach Einstellung der Wiedergabe eines auf einer Kassette aufgezeichneten Materials durch ein Abspielgerät bis zu dem Zeitpunkt vergeht, zu dem die Kassette in die Lagereinrichtung (2) zurücktransportierbar ist, nämlich die Summe (R) der minimalen Nachlaufzeit, der Rüchlaufzeit und der Auswurfzeit, zur Summe der minimalen Einlegezeit, Umspul-Abhörzeit und Vorlaufzeit addiert wird; daß das dadurch erhaltene Ergebnis von der Dauer der Spiellistenlänge subtrahiert wird;

daß das dadurch erhaltene Ergebnis durch die maximale Förderbedienungszeit dividiert wird und daß davon 4 subtrahiert wird.

3. Verfahren nach Anspruch 2, wobei die numerischen Werte der Einlegezeit, der Umspul-Abhörzeit, der Vorlaufzeit, der Nachlaufzeit, der Rücklaufzeit, der Auswurfzeit und der Förderbedienungszeit in Sekunden in Ubereinstimmung mit dem bekannten Leistungsverhalten der für die genannte gleichzeitige Mehrkanalübertragung zu verwendenden Kassettenzugriffs- und Kassettenwiedergewinnungseinrichtung ausgewählt werden.

4. Verfahren nach einem der Ansprüche 1 bis 3, wobei die Spiellisten vor Betrieb eines automatischen Mehrkanal-Übertragungssystems zusammengefügt werden.


## Revendications

1. Procédé de fusion d'une pluralité de listes de lecture, chacune étant prévue pour un unique canal et toutes étant de longueurs égales, selon une unique liste de lecture pour une transmission multi-canal simultanée en utilisant un système de transmission automatique (1) comprenant une pluralité de lecteurs de cassette (VTRa-VTRj), un dispositif de stockage (2) pour stocker des cassettes à lire au moyen des lecteurs de cassette et un mécanisme d'élévateur pour transporter des cassettes entre les lecteurs et le dispositif de stockage, une opération de lecture d'une cassette stockée mettant en jeu un temps de service d'élévateur (ET) pour changer la cassette et une somme (C) de temps de mise en place, d'insertion et de pré-défilement cumulatifs après transport de la cassette jusqu'au lecteur avant que le lecteur ne commence la reproduction d'un matériau enregistré, ledit procédé comprenant les étapes de :
   détermination du nombre minimum de changements de cassette susceptibles d'être réalisés pendant la longueur de la liste de lecture et vérification du fait que le nombre requis de changements de cassette est inférieur ou égal audit nombre maximum et s'il en est ainsi, vérification que pour chaque canal, pour chaque événement autre que le premier événement, la somme des temps de mise en place, d'insertion et de pré-défilement cumulatifs et des temps de service d'élévateur (ET) est inférieure ou égale à la somme des durées d'événement totales incluant l'événement qui est en train d'être vérifié moins le total des durées d'événement précédentes pour ce canal.

2. Procédé selon la revendication 1, dans lequel le nombre maximum de changements de cassette susceptibles d'être réalisés pendant la longueur de la liste de lecture est déterminé en ajoutant en secondes le temps consommé après la cessation de la reproduction d'un matériau enregistré sur une cassette par un lecteur jusqu'à ce que la cassette puisse être ramenée au dispositif de stockage (2), c'est-à-dire la somme (R) du temps de post-défilement minimum, du temps de rebobinage minimum et du temps d'éjection minimum, à la somme du temps de mise en place minimum, du temps d'insertion minimum et du temps de pré-défilement minimum ; en soustrayant le résultat ainsi obtenu de la durée de la longueur de la liste de lecture ; en divisant le résultat ainsi obtenu par le temps de service d'élévateur maximum et en soustrayant quatre du résultat.

3. Procédé selon la revendication 2, dans lequel des valeurs numériques en secondes du temps de mise en place, du temps d'insertion, du temps de pré-défilement, du temps de post-défilement, du temps de rebobinage, du temps d'éjection et du temps de service d'élévateur sont choisies conformément à la performance connue du dispositif d'accès et de recherche de cassette destiné à une utilisation pour ladite transmission multi-canal simultanée.

4. Procédé selon la revendication 1, 2 ou 3, dans lequel lesdites listes de lecture sont fusionnées avant un fonctionnement d'un système de transmission automatique multi-canal.

NETWORK STUDIO

ATS
111

ATS
112

ATS
113

— — — — —

100

101

102

103

FIG. 1

NETWORK STUDIO

ATS
1

100

101

102

103

FIG. 2

FIG. 3

FIG.4

VTR 1  CM 1  R ET C ....  CM 7  R

VTR 2  CM3

VTR 3  CM 5  CM 11

TIME GAP

PREP TIME

VTR 4  CM 2  CM 8

VTR 5  CM 4  CM 10

VTR 6  CM 6  CM 12

TIME (SEC)  180

VTR AND ELEVATOR ACTIVITIES VS TIME SCALE

FIG. 5

12